# EUROPEAN PATENT APPLICATION

(11) **EP 2 437 018 A1**
(43) Date of publication of application: **04.04.2012**
(21) Application number: 10425320.8
(22) Date of filing: 04.10.2010
(51) Int. Cl.: F27B 9/10, F27D 17/00

(54) **Tunnel kiln and burner for firing bricks**

(71) Applicant: Orlowski, Frank, 94447 Platting (DE); Ast, Felix Silvester, 39042 Bressanone (IT); Moedinger, Fritz, 39042 Bressanone (IT)
(72) Inventor: Orlowski, Frank, 94447 Platting (DE); Ast, Felix Silvester, 39042 Bressanone (IT); Moedinger, Fritz, 39042 Bressanone (IT)
(74) Representative: Chimini, Francesco

(57) **Abstract**

The present invention relates to a tunnel kiln (1) for firing ceramic articles, preferably bricks.

Such kiln comprises a kiln wall (2) which defines a containment chamber (4) of at least one ceramic article and a plurality of burners (6', 6", 8) distanced along the kiln wall (2) to heat said chamber (4) so as to promote firing of the ceramic article, wherein the chamber (4) is suitable for receiving at least partially unburned gaseous products from the burners (6', 6", 8) and/or from the ceramic product.

The kiln further comprises oxidant supplying means (10, 12), preferably supplying air, to the plurality of burners (6', 6", 8), and suction means (14) suitable for withdrawing a portion of the gaseous products from the containment chamber (4).

The suction means (14) are fluidically connected to the oxidant supplying means (10, 12) so that the portion of gaseous products feeds at least one (6', 6") of said burners (6', 6", 8).

The present invention also relates to a burner (6', 6"), preferably usable in the aforesaid kiln (1).

## Description

The present invention relates to a tunnel kiln for firing bricks.

It is known to use tunnel kilns for firing ceramic articles; such kilns, which can generally be considered heat exchangers, usually comprise walls which extend along a main direction between a proximal extremity and a distal extremity; the walls of the kiln define proximally an entrance opening and distally an exit opening, respectively used for the entrance of the product for firing, and for its exit.

A plurality of burners is usually provided to heat the firing chamber, heating the atmosphere so as to create the conditions needed for the ceramic conversion process to take place. The burners are consequently positioned in a fixed position, while the ceramic articles are movable along the kiln wall, in as much as transported upstream on carriages, to be subjected to pre-heating, firing and cooling steps.

Prior art kilns suffer however a plurality of drawbacks.

Kiln heating, in particular in the pre-heating zone, and its maintenance at a predefined temperature is a considerably complex operation given the repeated feed of ceramic articles in the kiln, and consequent reiterated entrance of cold air and cyclical exit of hot air from the kiln chamber.

The oscillations occurring in the kiln chamber thus produce unfavourable conditions for the article ceramic formation, and negatively affect the final mechanical properties of the product.

The purpose of the present invention is therefore to provide a tunnel kiln with an improved heat balance, in particular in the pre-heating and firing zones, and with reduced energy requirements.

The present invention also sets out to provide a burner preferably modified for use in the aforementioned kiln.

Such objectives are achieved by a kiln according to claim 1 and by a burner according to claim 13. The dependent claims show preferred embodiments.

The present invention will now be described in detail with the help of the enclosed figures, wherein:

figure 1 shows a schematization of the tunnel kiln of the present invention, according to a possible embodiment; and

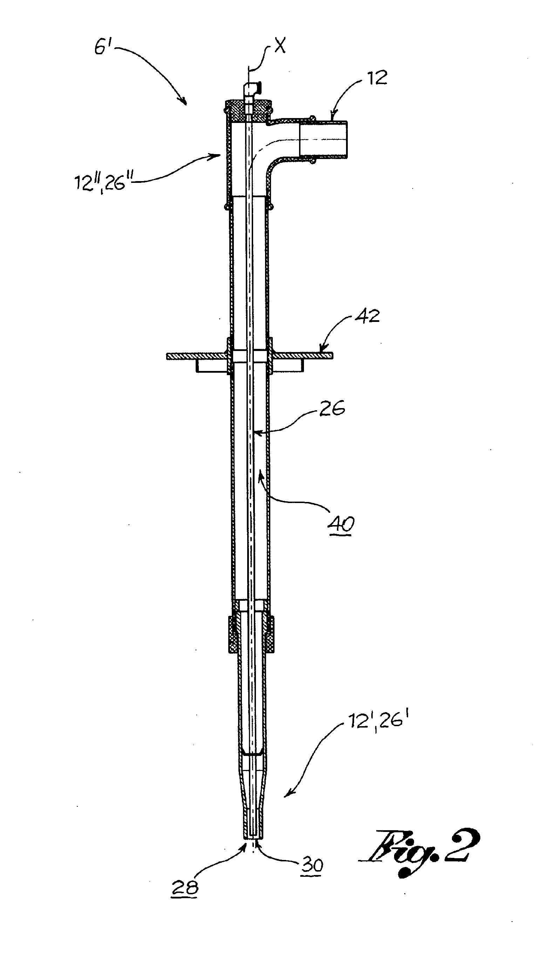

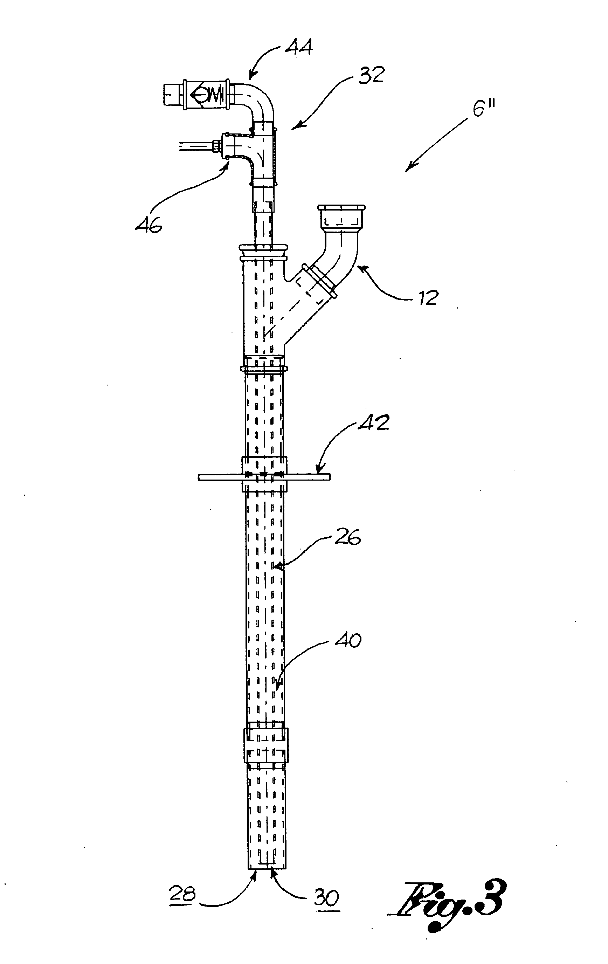

figures 2 and 3 show two burners of the present invention, according to two different variations.

In the enclosed figures, reference numeral 1 globally indicates a tunnel kiln for firing ceramic articles.

The tunnel kiln of the present invention is particularly suitable for firing bricks, both of the normal type and of the reduced body density, i.e. to conduct the ceramic conversion process of these articles; within this patent text, the term "ceramic conversion process" is taken to mean the process by means of which the brick is definitively deprived of its plasticity to become suitable for its final use, e.g. as a construction material.

The kiln 1 comprises a kiln wall 2 which defines a containment chamber 4 of at least one ceramic article.

According to one embodiment, the kiln wall 2 extends along a transport direction Y of the article between a proximal extremity portion 2a and a distal extremity portion 2b; the kiln wall preferably defines an entrance opening for the article in the proximal extremity portion and, similarly, an exit opening from the chamber in the distal extremity portion.

As a result, the ceramic article moves through the containment chamber in the direction of arrow 34, travelling all the way along it in the transport direction Y, such article being advantageously loaded onto dedicated transport cars (not shown) or other supports, such as a conveyor belt.

Vertically, i.e. transversally to the transport direction Y, the kiln wall 2 extends from a lower extremity zone 2" to a roof zone 2'; the roof zone 2' is preferably delimited by a ceiling 24 of the kiln wall 2.

For this reason, the height at which the ceiling is positioned in relation to a support surface corresponds to the maximum height of the article, or plurality of articles, which can be introduced into the containment chamber.

According to a version, the articles are stacked one upon the other in order to permit simultaneous transport with a single car.

According to an alternative variation, the ceramic articles are transported singly or in a single layer.

The kiln 1 further comprises a plurality of burners 6', 6", 8 distanced along the kiln wall 2 to heat the containment chamber 4 so as to promote firing of the ceramic article.

The burners 6', 6", 8 are therefore used to raise the temperature in the kiln 1, so that the ceramic conversion process can take place.

Preferably, the burners 6', 6", 8 are distanced along the ceiling 24 of the kiln wall 2.

Advantageously, the plurality of burners is distanced along the transport direction Y and, even more preferably, also transversally to this direction.

As a result, according to these last two variations, the burners are advantageously divided into rows/columns so as to cover the kiln wall, optionally its ceiling.

Advantageously, at least one burner 6', 6", 8 has intermittent or (micro-)pulsating working; as a consequence, by increasing and decreasing (or turning on and off) the burner flame it is possible to create fluid currents in the containment chamber; in this way it is possible to uniform the kiln temperature without using additional circulation pumps.

As further illustrated below, at least one burner 6', 6", 8 uses a gaseous, liquid or solid fuel or mixtures thereof, e.g. mixtures of a gas and a solid.

Consequently, the supply of such burner may be diversified according to the available fuel, or to its relative cost.

In addition to that, in the present burner it is possible to use more than one fuel simultaneously, e.g. by supplying it with gas-liquid, gas-solid, liquid-solid mixtures, as illustrated further below.

The containment chamber 4 receives at least partially unburned gaseous products from the burners 6', 6", 8 and/or from the ceramic product. Preferably, the gaseous products comprise low temperature carbonization gases.

In fact, it is often difficult to ensure complete combustion of the fuel supplied to the burners; consequently the fuel portion exceeding the stoichiometric quantity for combustion is, in any case, set free in the containment chamber, remaining unused. As well as this, the organic components of the ceramic article are also progressively released into the kiln, as a result of the rising temperature, creating an energy-enriched atmosphere. For example, the temperatures of this atmosphere range between 50°C and 450°C, preferably between 150°C and 400°C.

The kiln 1 further comprises oxidant supplying means 10, 12, preferably supplying air, to the plurality of burners 6', 6", 8, and suction means 14, suitable for withdrawing a portion of the gaseous products from the containment chamber 4.

As a result, the oxidant supplying means 10, 12 deal with supplying the necessary oxidant to the burner, while the suction means 14 extract a part of the gaseous products from the kiln, so as to enable use of the energetically rich gaseous products.

As well as the unburned material mentioned above, the gaseous products contained in the kiln are in fact extremely heated by the burners so that they also constitute a heat source for the further fuel oxidation.

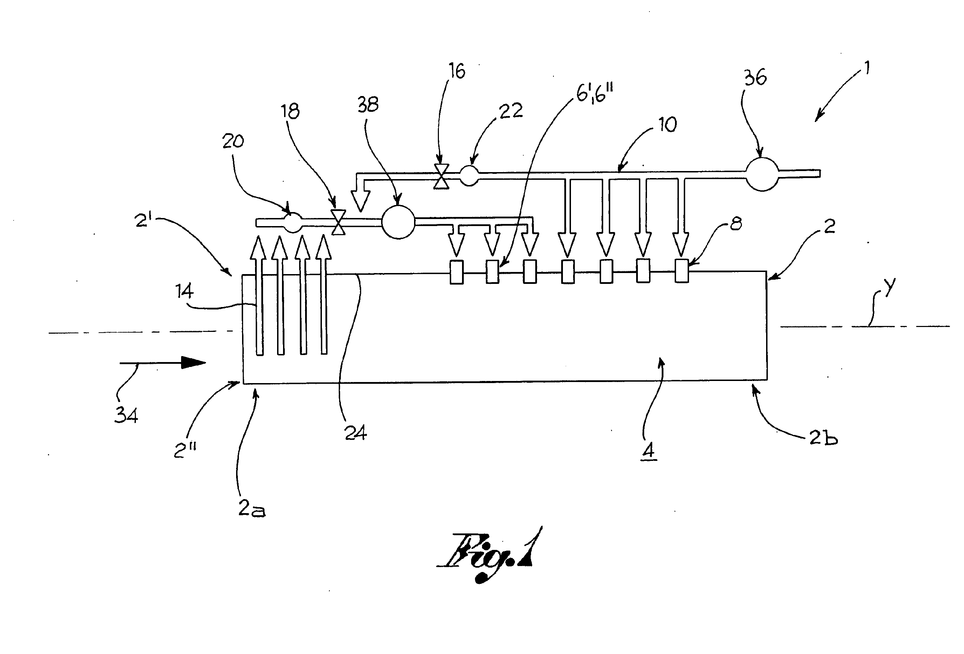

In the variation shown in figure 1, the oxidant supplying means 10, 12 comprise a first duct 10, preferably positioned outside the chamber 4, which sucks atmospheric air to deliver it, e.g. by means of a pump or a blower 36, to the burner.

According to a further variation, the suction means 14 comprises at least one second duct 14, which crosses the kiln wall 2 to convey the portion of gaseous products outside the containment chamber 4. For example, the portion of gaseous products is moved by means of a further pump or blower 38 fluidically connected to the chamber and to the burners.

Preferably, the kiln 1 comprises fuel feeding means (not shown in the schematisation of figure 1, but indicated by reference numeral 26 in the subsequent figures) to the plurality of burners 6', 6", 8; these fuel feeding means are preferably positioned in a suitable manner for the fuel and oxidant to interact so as to form/maintain a flame.

In addition to that, the suction means 14 are fluidically connected to the oxidant supplying means 10, 12 so that the portion of gaseous products feeds at least one 6', 6" of said burners 6', 6", 8.

As a result, the fluidic connection between the suction means and the oxidant supplying means allow delivery of the portion of gaseous products to at least one burner, preferably to a plurality thereof.

The energetic features of the gaseous products thereby influence the combustion of the burners, by virtue of co-combustion phenomena, to the extent that a smaller quantity of "cold" atmospheric air is sucked, and on account of the presence of unburned or partially combusted components which are subsequently subjected to a new oxidation procedure; this way the overall energy balance is more favourable than in the prior art kilns.

According to a particularly preferred variation, the suction means 14 act in a roof zone 2' of the kiln wall 2, i.e. at the ceiling 24 of the kiln wall 2, delimiting the latter at the top. On account of the gas convective motion in the containment chamber, the gaseous products preferably collect high up, to be subsequently withdrawn by the suction means.

According to one embodiment, the oxidant supplying means 10, 12 comprise adjustment means 16 of the quantity of oxidant supplied to the burners 6', 6", 8.

To this purpose, the adjustment means 1 are suitable for modifying the air flow to the burner, so as to improve combustion. For example, the adjustment means 16 are suitable for allowing/preventing the oxidant passage in the oxidant supplying means 10, 12, or for reducing/increasing its flow.

Preferably, the adjustment means comprise a gate valve, or a (solenoid) valve.

According to one variation, the suction means 14 also comprise secondary adjustment means 18, e.g. of the aforementioned type, to regulate the quantity of gaseous products fed to the burner.

Advantageously, the kiln comprises oxygen detector means 20 operatively connected to the suction means 14 to detect the quantity of oxygen in the portion of gaseous products.

As a result, the oxygen detector means are suitable for detecting the quantity of oxygen in the portion of gaseous products and for generating a corresponding signal.

For example, the aforesaid signal is generated in the presence of a quantity of oxygen in the portion of gaseous products of 4% or more.

According to a further variation, the oxidant supplying means 10, 12 also comprise secondary oxygen detector means 22, which perform an analogous function on the incoming oxidant flow; as a result, the secondary oxygen detector means 22 are suitable for measuring the quantity of oxygen passing through the oxidant supplying means 10, 12, and for generating a further signal.

Preferably, the (secondary) oxygen detector means 20, 22 comprise at least one lambda probe.

According to a particularly preferred variation, the oxygen detector means 20 are operatively connected to the adjustment means 16 so that the latter increase/decrease the oxidant supply depending on the signals generated and sent by the detector means 20.

As a result, the signal or signals generated by the oxygen detector means are sent to the adjustment means so that the latter act on the oxidant flow.

A similar procedure takes place for the embodiments envisaging secondary oxygen detector means 22 in the supplying means 10, 12; in this case, the signal generated by the detector means 22 is collected by the secondary adjustment means 18, which modify/stop the quantity of gaseous products fed to the burner, for example in the case wherein gaseous products containing an excessively reduced quantity of oxygen risk to extinguish the burner.

According to one variation, the kiln 1 comprises management and control means, such as a logic control unit, through which the oxygen detector means 20 and the adjustment means 16 are connected.

According to a further variation, the management and control means also operatively connect the detector means 22 and the secondary adjustment means 18.

As a result, the management and control means allow regulation in a substantially automatic manner of the supply of oxidant and gaseous products to the burners, so as to make continual measurements/adjustments depending on specific oscillations, both qualitative and quantitative, of these supplies, but also depending on the energy requirement of the ceramic conversion process.

According to a further variation, the management and control means are also operatively connected to the fuel feeding means to the plurality of burners 6', 6", 8, preferably in such a way as to enable the aforesaid intermittent or (micro-)pulsating working.

According to one advantageous variation, the suction means 14 are fluidically connected to means for re-introducing the portion of gaseous products into the containment chamber 4.

As a result, according to this variation, the suction means withdraw the portion of gaseous products from the containment chamber to convey it, via the re-introducing means, to a different zone of the same chamber.

In other words, according to this variation, the portion of gaseous product is divided between the burner supplying means and the re- introducing means, e.g. via a ramification or valve system, to take advantage of the heat content of the atmosphere contained in the chamber 4.

As regards the portion of gaseous products controlled by the re-introducing means, such portion is preferably re-injected into the chamber 4 at the lower extremity zone 2" of the kiln wall 2.

As a result, since the portion of gaseous products is preferably withdrawn at the roof zone 2' of the kiln wall, and subsequently re-introduced at the lower extremity zone 2" of such wall, a forced circulation system is thereby created inside the kiln.

In fact, the hotter gaseous products are withdrawn at the roof and conveyed to the lower extremity zone, e.g. by means of pumps/fans, to uniform kiln heating and to prevent the gradient formation inside it.

The present invention also relates to a burner 6' , 6" preferably usable in a kiln 1 according to any of the previous embodiments.

The burner 6' , 6" comprises an oxidant supplying circuit 12, preferably supplying air, and at least one fuel feeding circuit 26.

Preferably, the fuel feeding means described above comprise the fuel feeding circuit 26.

Advantageously, each circuit 12, 26 comprises a tubular body which extends from a first 12', 26' to a second 12", 26" extremity portion along a burner axis X.

When the burner is joined to the kiln 1, in particular to the kiln wall 2 and preferably to the ceiling 24, the first 12', 26' extremity portion engages the containment chamber 4, while the second 12", 26" remains outside it.

To such purpose, the burner 6', 6" advantageously comprises an attachment flange 42 associable to the kiln wall 2; advantageously, such flange 42 extends in a radial direction from the burner outer surface, forming for example a substantially circular lip.

The aforementioned circuits 12, 26 terminate respectively in an oxidant-dispensing nozzle 28 and a fuel-dispensing nozzle 30, and extend reciprocally coaxially to the burner axis X at least at the nozzles 28, 30 so that the dispensed fuel and oxidant interact to generate and/or maintain a flame.

As a result, the nozzles are positioned in a suitable manner for fuel, preferably pet-coke, and oxidant to combine and perform fuel oxidation.

According to one embodiment, the fuel feeding circuit 26 comprises, upstream of the nozzle 30, at least one ramification 32 for the simultaneous supply of different fuel types.

Such variation is therefore particularly suitable in the case wherein it is desirable to simultaneously supply gaseous and liquid, gaseous and solid, liquid and solid, diverse liquid, diverse solid or diverse gas fuels, or combinations thereof; in such case, the first type of fuel is fed through a first burner neck 44, while the second type through a second burner neck 46, communicating with the first neck 44 and constituting with it the aforesaid ramification 32.

As a result, during transport from the ramification 32 to the nozzle 30, the aforesaid fuel types can mix with each other, especially for the embodiments envisaging a turbulent flow in such circuit 26.

Preferably, the circuits 12, 26 extend coaxially substantially for the entire length of the burner, i.e. they extend coaxially between the first 12', 26' and the second 12", 26" extremity portion.

As a result, according to such variation, the circuits 12, 26 define between them a cylindrical chamber 40, inside of which turbulent motion is preferably generated.

Preferably, the radially outermost supplying circuit (12 or 26) has an extremity portion of 12', 26' with a through section tapered towards its nozzle (28 or 30).

As a result, according to this variation, the through section, or cylindrical chamber 40, progressively decreases moving between the second 12", 26" and the first 12', 26' extremity portion.

This way, the flow speed at the nozzle increases considerably, accelerating the oxidant/fuel coming out of the burner.

In the variations illustrated, the radially outermost circuit is the oxidant supplying circuit 12.

Furthermore, the fuel-dispensing nozzle 30 and the oxidant-dispensing nozzle 28 are axially staggered so that the fuel exerts a thrust force on the oxidant, or vice versa.

As a result, such arrangement of the nozzles allows to force the oxidant by means of the fuel, preferably vice versa, so as to generate a longer flame, and improve the heating of the containment chamber.

The aforesaid thrust force is generated solely in the presence of the aforesaid axial staggering of the nozzles: in the case in which the two nozzles open in the same axial position such effect is substantially not observable.

Preferably, the radially innermost dispensing nozzle terminates inside the radially outermost supplying circuit.

Innovatively, the kiln of the present invention enables at least partial recirculation of the internal atmosphere so as to take advantage of the energy supply to improve performance of the burner, other conditions being equal.

This way, in addition, the air mass circulating in the kiln is increased and thereby also the ratio of the brick mass to the air mass, as well as the air speed, with a positive effect on the heat transmission coefficient.

Advantageously, the kiln of the present invention is suitable for generating strong turbulence inside it, so as to uniform the heat in the containment chamber and enable improved firing of the ceramic article. In fact, a faster flow inside the kiln chamber makes it possible to create a better heat exchange between the solid and the gaseous products.

Such effect is of a certain relevance both when the ceramic articles are amassed/piled, and when the ceramic conversion process takes place on hollow articles.

Advantageously, moreover, the kiln of the present invention works on the principle of introducing variable gas quantities with a changing pressure so as to create a pump effect in the kiln environment. This way, it is also possible to convey gaseous flows into the interstitial spaces between one article and those adjacent to it, traditionally zones which are of difficult access.

The pump effect just described thereby enables a reduction of the pre-heating/firing temperatures, the article mechanical resistance being equal.

Advantageously, the kiln of the present invention allows to improve the overall quality of the articles, substantially reducing both production rejects and the amount of fuel used.

In fact, merely by way of example, a lowering of the oxygen content of the kiln allows to perform some ceramic reactions at lower temperatures improving the mechanical resistance as well as appearance of the article (minor efflorescence occurrence).

Advantageously, the kiln of the present invention functions more silently than prior art ones, above all thanks to the reduction of the compressors needed for it to function; e.g. a plurality of burners can be connected to a single recirculation system.

Advantageously, the kiln of the present invention allows to avoid fumes post-treatment in that the concentration of organics at the chimney stack is already below the legal limits.

Advantageously, the kiln of the present invention is suitable for functioning substantially in complete autonomy: regulations, adjustments, safety blocks, alarm generation and the like are all performed automatically; this way, it enables a reduction of the presence of specialised operators on the plants.

Innovatively, the burner of the present invention allows to exert a thrust force of the fuel on the oxidant, or vice versa, so that the generated flame is significantly longer than that of traditional burners.

Advantageously, the kiln and the burner of the present invention allow to diversify fuel supplies, so as to take into account any raw materials oscillations, or their availability.

A person skilled in the art may make variations to the aforesaid embodiments of the kiln and burner or replace elements with others functionally equivalent so as to satisfy specific requirements.

For example, although it is preferable to use air as oxidant, further embodiment variations envisage the use of oxygen-enriched air or pure oxygen.

Further, the ramification of the aforesaid burner has been described on the basis of two burner necks; however further variations may envisage a larger number of necks, as required.

Lastly, at the outset, the present invention was described in relation to the problems connected with the pre-heating zone of the kiln; however, further variations envisage that the system of the present invention can also be used in the intermediate or soaking zone of the kiln, where the highest temperatures are reached.

Such variations are also contained within the sphere of protection as defined by the following claims.

Moreover, each variation described as belonging to a possible embodiment may be made independently of the other variations described.

## Claims

1. Tunnel kiln (1) for firing ceramic articles, preferably bricks, comprising:
- a kiln wall (2) which defines a containment chamber (4) for at least one ceramic article;
- a plurality of burners (6', 6", 8) distanced along the kiln wall (2) to heat said chamber (4) so as to promote firing of the ceramic article;
wherein the containment chamber (4) receives at least partially unburned gaseous products from the burners (6', 6", 8) and/or from the ceramic product;
- oxidant supplying means (10, 12), e.g. supplying air, to the plurality of burners (6', 6", 8); and
- suction means (14), suitable for withdrawing a portion of the gaseous products from the containment chamber (4); wherein the suction means (14) are fluidically connected to the oxidant supplying means (10, 12) so that the portion of gaseous products feeds at least one (6', 6") of said burners (6', 6", 8).

2. Kiln according to claim 1, wherein the suction means (14) act in a roof zone (2') of the kiln wall (2).

3. Kiln according to claim 1 or 2, wherein the oxidant supplying means (10, 12) comprise adjustment means (16) of the oxidant quantity fed to the burners (6', 6", 8), e.g. a gate valve.

4. Kiln according to any of the previous claims, comprising oxygen detector means (20) operatively connected to the suction means (14) to detect the quantity of oxygen in the portion of gaseous products.

5. Kiln according to claim 3 and 4, wherein the oxygen detector means (20) are operatively connected to the adjustment means (16) so that the latter increase/decrease the oxidant supply depending on signals sent by the detector means (20).

6. Kiln according to claims 3 and 4 or according to claim **5**, further comprising management and control means, and wherein the oxygen detector means (20) and the adjustment means (16) are connected through the management and control means.

7. Kiln according to any of the previous claims, wherein the suction means (14) are fluidically connected to means for re-introducing the portion of gaseous products into the containment chamber (4).

8. Kiln according to claim 7, wherein the re-introducing means act in a lower extremity zone (2") of the kiln wall (2).

9. Kiln according to any of the claims from 4 to 6, wherein the oxygen detector means (20, 22) comprise at least one lambda probe.

10. Kiln according to any of the previous claims, wherein at least one burner (6', 6"; 8) has intermittent or (micro-)pulsating working.

11. Kiln according to any of the previous claims, wherein the burners (6', 6", 8) are distanced along a ceiling (24) of the kiln wall (2).

12. Kiln according to any of the previous claims, wherein at least one burner (6', 6", 8) uses a gaseous, liquid or solid fuel or mixture of the same, e.g. a gas-solid fuel.

13. Burner (6', 6", 8), preferably usable in a kiln (1) according to any of the previous claims, comprising an oxidant supplying circuit (12), preferably supplying air, and at least one fuel feeding circuit (26), e.g. a liquid fuel, wherein said circuits (12, 26):
- terminate respectively with an oxidant-dispensing nozzle (28) and a fuel-dispensing nozzle (30); and
- extend reciprocally coaxially in relation to a burner axis (X) at least at the nozzles (28, 30) so that the dispensed fuel and oxidant interact to generate and/or maintain a flame;
wherein the fuel-dispensing nozzle (30) and the oxidant-dispensing nozzle (28) are axially staggered so that the fuel exerts a thrust force on the oxidant, or vice versa.

14. Burner according to claim 13, wherein the radially innermost dispensing nozzle (28; 30) terminates inside the radially outermost supplying circuit.

15. Burner according to claim 13 or 14, wherein the radially outermost supplying circuit (12; 26) has an extremity portion (12', 26') with a through section tapered towards its nozzle (28; 30).
